# EUROPÄISCHE PATENTANMELDUNG

(11) **EP 4 420 575 A1**
(43) Veröffentlichungstag der Anmeldung: **28.08.2024**
(21) Anmeldenummer: 24157810.3
(22) Anmeldetag: 15.02.2024
(51) Int. Cl.: A47J 37/07

(54) **FEUERUNGSEINRICHTUNG ZUM ZUBEREITEN, VORZUGSWEISE ZUM GRILLIEREN UND/ODER BACKEN VON NAHRUNGSMITTELN**

(30) Priorität: 21.02.2023 CH 1682023
(71) Anmelder: Leu, Benno, 6034 Inwil (CH)
(72) Erfinder: Leu, Benno, 6034 Inwil (CH)
(74) Vertreter: Luchs, Willi

(57) **Zusammenfassung**

Eine Feuerungseinrichtung (10) zum Zubereiten, vorzugsweise zum Grillieren und/oder Backen von Nahrungsmitteln, weist wenigstens ein Aussengehäuse (15) auf, das mit einer vorderen Beschickungsöffnung (19) und mit einem mit Brennmaterial beschickbaren Feuerraum (21) versehen ist. Die Aufnahme des Brennmaterials im Feuerraum (21) erfolgt in einem in letzterem eingesetzten Feuerungsbehälter (25). Auf dem Feuerungsbehälter (25) ist eine für das Zubereiten der Nahrungsmittel vorgesehene Heizscheibe (20) mit einem Ausschnitt (22) für den Zugang von aussen in den Feuerraum gehalten. Sehr vorteilhaft ist die Heizscheibe (20) und vorzugsweise der Feuerungsbehälter (25) drehbar im Aussengehäuse (15) um eine annähernd vertikale Achse (A) gelagert. Damit wird eine neuartige benutzerfreundliche Anwendung in der Art eines Chemineeofens erzielt.

## Beschreibung

Die Erfindung betrifft eine Feuerungseinrichtung zum Zubereiten, vorzugsweise zum Grillieren und/oder Backen von Nahrungsmitteln nach dem Oberbegriff des Anspruchs 1.

Solche Feuerungseinrichtungen für ein aufgewärmtes Zubereiten von Nahrungsmitteln sind jeweils mit wenigstens einem in der Art eines Cheminéeofens ausgebildeten Aussengehäuse gebaut. Dabei ist dieses Aussengehäuse mit einer vorderen Beschickungsöffnung, einem oberen Auslass für Rauchgas und mit einem mit Brennmaterial, vornehmlich Holz, beschickbaren Feuerraum versehen. Die Aufnahme des Brennmaterials im Feuerraum kann entweder direkt in einer unteren Schale des Aussengehäuses oder in einem in letzterem eingesetzten Feuerungsbehälter gebildet sein.

Eine Feuerungseinrichtung gemäss der Druckschrift EP 3 967 191 A1 ist mit einer Feuerschale für die Aufnahme des Brennmaterials der zwischen einer in der Feuerschale angeordneten Bodenplatte und einer vorzugsweise beim oberen Rand der Feuerschale befindlichen Heizscheibe gebildet. Dabei weist die Feuerschale wenigstens eine seitliche Ausnehmung zwischen der Bodenplatte und der oberen Heizscheibe für das Beschicken des Brennmaterials auf. Die Bodenplatte oder eine auf diese legbare Platte aus einem hitzebeständigen Stein oder Keramik vorzugsweise zum Backen von Pizzas, Brot oder dergleichen ist hiefür mit einer Auflagefläche ausgebildet. Zudem ist oberseitig auf die Feuerschale ein Deckel aufsetzbar, der für die Grillfunktion weggeklappt werden kann, indes beim Backen wird er draufgesetzt und die Feuerschale somit zugedeckt ist, um die Wärme in letzterer besser zu konservieren.

Der Erfindung liegt die Aufgabe zugrunde, eine Feuerungseinrichtung nach der eingangs erwähnten Gattung zu schaffen, die mit einer neuartigen Ausgestaltung versehen und dabei sehr praktisch handhabbar ist.

Diese Aufgabe ist erfindungsgemäss durch die Merkmale des Anspruchs 1 gelöst.

Mit dieser erfindungsgemässen Feuerungseinrichtung, die mit einer im Aussengehäuse oder auf dem Feuerungsbehälter gehaltenen Heizscheibe mit einem Ausschnitt für den Zugang von aussen in den Feuerraum vorgesehen ist, wird eine neuartige benutzerfreundliche Anwendung mit ihr in der Art eines Cheminéeofens erzielt.

Sehr vorteilhaft ist die Heizscheibe mit dem Ausschnitt auf einem im Aussengehäuse integrierten Feuerungsbehälter platziert und sie ist dabei darin um eine annähernd vertikale Achse drehbar gelagert. Zweckmässigerweise ist die Heizscheibe und der mit ihr verbundene Feuerungsbehälter im Aussengehäuse rotierbar gelagert.

Mit dieser zumindest drehbaren Heizscheibe kann innen bei der Beschickungsöffnung des Aussengehäuses entweder der Ausschnitt der Heizscheibe für den Zugang zum Feuerraum oder bei gedrehter Heizscheibe vorzugsweise um einen Winkel von bis zu 180° ein Auflegen der Lebensmittel auf ihre Auflagefläche von aussen zugänglich gemacht werden.

Wenn die Heizscheibe mit ihrem Ausschnitt vorne bei der Beschickungsöffnung positioniert ist, ist für Benutzer das Ambiente des Feuers vorne beim Aussengehäuse ersichtlich, hingegen können sie die Lebensmittel sehr komfortabel auf die Auflagefläche der Heizscheibe legen, wenn diese gedreht und vorne positioniert und der Ausschnitt nach hinten ins Innere des Aussengehäuses gedreht ist.

Mit einer weiteren Drehung der Heizscheibe um ca. 180° können die draufgelegten Nahrungsmittel hinter das Feuer in den Rückraum mit dem hinten geschlossenen Aussengehäuse gebracht und dort mit einer annähernd gleichbleibenden erforderlichen Heiztemperatur aufgeheizt, gegrillt, gegart oder gebacken werden.

Bei der Erfindung ist des Weiteren vorgesehen, dass sich das Aussengehäuse zweckmässigerweise aus einer unteren und einer oberen Schale zusammensetzt, die gegeneinander gerichtet sind, wobei wenigstens ein oberer Auslass für den Rauchabzug und seitlich die vordere Beschickungsöffnung vorgesehen sind.

Mit Vorteil sind dabei das Aussengehäuse und der schalenförmige Feuerungsbehälter aus einem umgeformten Metall gefertigt und seine obere und untere Schale vorzugsweise zusammengeschweisst.

Mit dieser schnabelförmigen Ausbildung des Aussengehäuses ist dieses sehr ästhetisch geformt und die Heizscheibe mit dem Feuerungsbehälter lassen sich optimal darin einbetten.

Die vordere Beschickungsöffnung des schnabelförmigen Aussengehäuses ist mit einer solchen Länge und Höhe dimensioniert, dass der Feuerungsbehälter und die an ihm befestigte Heizscheibe gemeinsam in das Aussengehäuse hineinstellbar sind und darin drehbar gelagert werden können bzw. wieder aus diesem entnehmbar sind.

Anhand von Ausführungsbeispielen ist die Erfindung sowie weitere Vorteile derselben nachfolgend unter Bezugnahme auf die Zeichnung näher erläutert. Es zeigt:
- Fig. 1: eine perspektivische Vorderansicht einer erfindungsgemässen Feuerungseinrichtung als Explosionsdarstellung;
- Fig. 2: eine perspektivische unterseitige Ansicht der unteren Schale des Aussengehäuses nach Fig. 1 als Explosionsdarstellung;
- Fig. 3: einen Vertikalschnitt der Feuerungseinrichtung nach Fig. 1 mit einem aufgesetzten Kaminrohr;
- Fig. 4: eine schematische Vorderansicht der Feuerungseinrichtung nach Fig. 1 mit dem nach hinten gedrehten Ausschnitt der Heizscheibe;
- Fig. 5: einen Vertikalschnitt einer Variante einer erfindungsgemässen Feuerungseinrichtung mit einer oberen Grillscheibe; und
- Fig. 6: eine Vorderansicht der Feuerungseinrichtung nach Fig. 5 mit einer Variante einer Beschickungsöffnung.

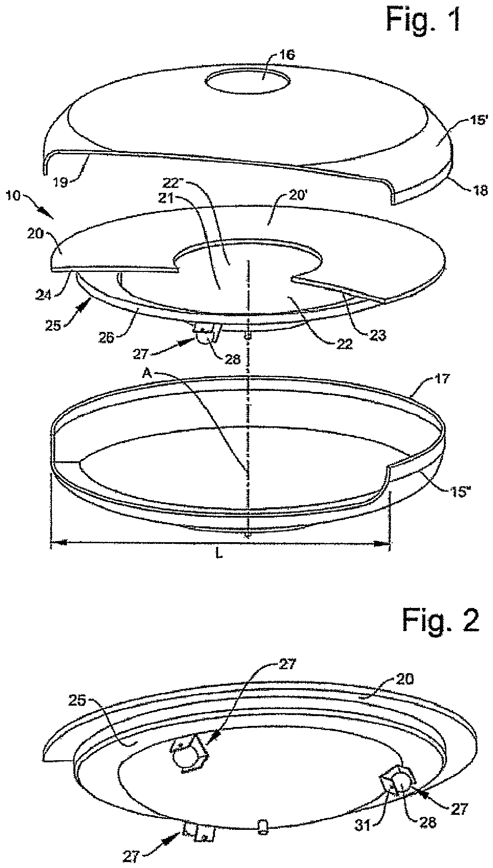

Fig. 1 bis Fig. 4 zeigen eine Feuerungseinrichtung 10, die als ein Cheminéeofen gebaut ist und im Wesentlichen aus einem Aussengehäuse 15 mit einer vorderen Beschickungsöffnung 19 und einem oberen Auslass 16 für den Rauchabzug sowie aus einer im Aussengehäuse 15 angeordneten Heizscheibe 20 und einem Feuerungsbehälter 25 mit einem Feuerraum 21 darin besteht.

Das Aussengehäuse 15 setzt sich aus einer unteren Schale 15' und einer oberen Schale 15" zusammen, die gegeneinander gerichtet sind und mit ihren kreisförmigen Stosskanten 17, 18 aneinander befestigt sind, vorzugsweise durch eine Schweissverbindung. Diese beiden gleichförmigen Schalen 15', 15" sind dabei aus einem umgeformten Metall gefertigt. Selbstverständlich könnte aber das Aussengehäuse anders als dargestellt gefertigt sein, wie zum Beispiel durch einen Teilring mit einem unteren und oberen Deckel, die ebenfalls vorzugsweise aneinander verschweisst oder durch Befestigungsmittel, wie Schrauben oder Nieten, verbunden sein könnten.

Durch diese vordere Beschickungsöffnung 19 beim Aussengehäuse 15 kann Brennmaterial, wie Holz, Kohle und/oder anderes brennbares Material oder Flüssigkeiten, Gel etc. in den Feuerraum 21 des Feuerungsbehälters 25 beschickt werden. Damit können im aufgeheiztem Zustand dieser Feuerungseinrichtung 10 alle Art von Nahrungsmitteln grilliert, gegart, gekocht, gebacken und/oder anderweitig zugerichtet werden. Selbstverständlich können auch Flüssigkeiten oder irgendwelche Gegenstände aufgeheizt werden.

Erfindungsgemäss ist auf dem Feuerungsbehälter 25 die für das Zubereiten der Nahrungsmittel vorgesehene Heizscheibe 20 mit einem Ausschnitt 22 für den Zugang von aussen in den Feuerraum 21 gehalten.

Die Heizscheibe 20 mit dem Ausschnitt 22 ist auf diesen im Aussengehäuse 15 integrierten Feuerungsbehälter 25 platziert, wobei diese zusammen drehbar im Aussengehäuse 15 um eine annähernd vertikale Achse A gelagert sind. Die Heizscheibe 20 ist ebenfalls mit Vorteil auf dem Feuerungsbehälter 25 befestigt, wie zum Beispiel durch eine Schweissverbindung unterhalb der Heizscheibe 20, mittels der verhindert wird, dass sich letztere durch die Hitzeeinwirkung verziehen kann.

Vorne innerhalb bei der Beschickungsöffnung 19 des Aussengehäuses 15 kann von einem Benutzer der Ausschnitt 22 der Heizscheibe 20 für den Zugang zum Feuerraum 21 in seiner entsprechenden Drehposition eingestellt werden, wie dies in Fig. 1 in der Explosionsansicht ersichtlich ist.

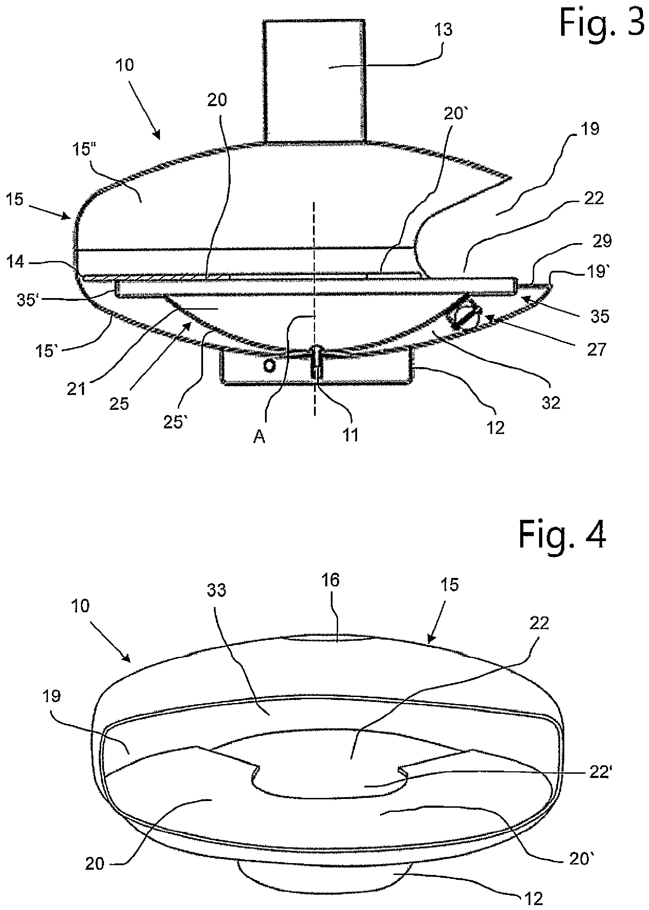

Hingegen beim Drehen der Heizscheibe 20 um einen Winkel von annähernd 180°, bei der sich dann ihre Auflagefläche 20' vorne bei der Beschickungsöffnung 19 befindet, wie dies in Fig. 4 veranschaulicht ist, kann ein Auflegen von Nahrungsmitteln von aussen erfolgen. Der Ausschnitt 22 der Heizscheibe 20 und damit das Feuer im Feuerungsbehälter 25 sind dann in den Rückraum 33 im Aussengehäuse 15 geschwenkt und der die Nahrungsmittel auflegende Benutzer ist in einem gewissen Masse vom Feuer und der Hitze geschützt.

Für das Drehen des Feuerungsbehälters 25 weist dieser ein Drehlager 27 auf, das zweckmässigerweise aus drei um 120° versetzt zueinander angeordnete Kugeln 28 besteht, die jeweils in einem Käfig 31 unterhalb des Feuerungsbehälters 25 rotierbar gelagert und in der unteren Schale 15' des Aussengehäuses 15 geführt sind. Sie ermöglichen ein berührungsloses Drehen des Feuerungsbehälters und der Heizscheibe in der Schale um eine annähernd vertikale Achse A. Selbstverständlich könnte dieses Drehlager 27 unterschiedlich ausgebildet sein. So könnte auch ein Gleitlager zwischen diesen oder statt Kugeln andere Elemente, wie mehrere Gleitrollen oder dergleichen vorgesehen sein.

Die Heizscheibe 20 ist ausser bei ihrem Ausschnitt 22 ringförmig ausgebildet und dabei koaxial in der unteren mit einem kreisförmigen Querschnitt versehenen Schale 15' des Aussengehäuses 15 verlaufend derart angeordnet, dass zwischen diesen ein ringförmiger Dichtspalt 14 besteht, durch den verhindert wird, dass Nahrungsmittel von der Auflagefläche 20' auf der Heizscheibe 20 aussen herunterfällt.

Bei der Heizscheibe 20 mit ihrer ringförmigen Grundform mit einer inneren Öffnung 22' ist der Ausschnitt 22 begrenzt durch Schnittkanten 23, 24 segmentförmig ausgebildet, durch den die Heizscheibe 20 mit einer solchen Länge an ihrem Umfang mit ausgeschnitten ist, dass diese annähernd der Länge L der Beschickungsöffnung 19 im Aussengehäuse 15 entspricht. Dieser Ausschnitt 22 und die Öffnung 22' der Heizscheibe 20 ermöglichen, dass sich das im Feuerraum 21 des Feuerungsbehälters 25 entfachte Feuer genügend voluminös im Aussengehäuse 15 mit dieser erwünschten Ambiente ausdehnen kann.

Die obere Auflagefläche 20' der Heizscheibe 20 liegt vorzugsweise auf der Höhe der unteren die Beschickungsöffnung 19 begrenzenden Längskante 19' des Aussengehäuses 15, so dass ein optimaler Zugang beim Auflegen von Nahrungsmitteln oder dergleichen auf die Heizscheibe gegeben ist.

Die Beschickungsöffnung 19 ist mit einer solchen Länge L und Höhe dimensioniert, dass der Feuerungsbehälter 25 und die auf ihm befestigte Heizscheibe 20 gemeinsam in das Aussengehäuse 15 einsetzbar sind und darin gelagert werden können bzw. wieder aus diesem entnehmbar sind. Zu diesem Zwecke entspricht die Länge L der Beschickungsöffnung 19 annähernd dem Aussendurchmesser des Aussengehäuses 15.

Gemäss Fig. 3 weist der Feuerungsbehälter 25 eine den Feuerraum 21 bildende Schale 25' mit dem unterhalb von dieser angeordneten Drehlager 27 und einem Zentriermittel 11 auf, wobei die Schale 25' oben einen nach aussen vorstehenden ringförmigen Rahmen 35 umfasst, auf dessen Oberseite die Heizscheibe 20 befestigt ist. Zudem ist bei der Schale 15' des Aussengehäuses 15 ein sich nach innen erstreckender ringförmiger Saum 29 zumindest entlang der Beschickungsöffnung 19 angebracht, der sich nach innen annähernd bis zur Aussenseite 35' des Rahmens 30 erstreckt. Mit diesem ringförmigen Rahmen 35, der sich rundum annähernd bis zum Aussengehäuse 15 erstreckt, und diesem Saum 29 wird bezweckt, dass nicht Lebensmittel, Brennmaterial, Asche oder sonstiges Material in den Ringraum 32 zwischen den Feuerungsbehälter 25 und das Aussengehäuse 15 fallen kann. Der Saum 29 kann ebenfalls als Segment oder als Teilring oder vollumfänglicher Ring ausgebildet sein.

Das Aussengehäuse 15 steht auf einem Sockel 12 und es ist auf ihm bei seinem oberen Auslass 16 ein Kaminrohr 13 aufgesetzt, durch welches der entstehende Rauch abgesogen wird. Zudem ist im Sockel 12 dieses Zentriermittel 11 enthalten, durch welches der Feuerungsbehälter 25 in der Achse A zentriert ist. Dieser Sockel 12 und das Kaminrohr 13 können selbstverständlich anders als dargestellt ausgestaltet sein. Dieser Sockel könnte auch als Ständer ausgebildet sein.

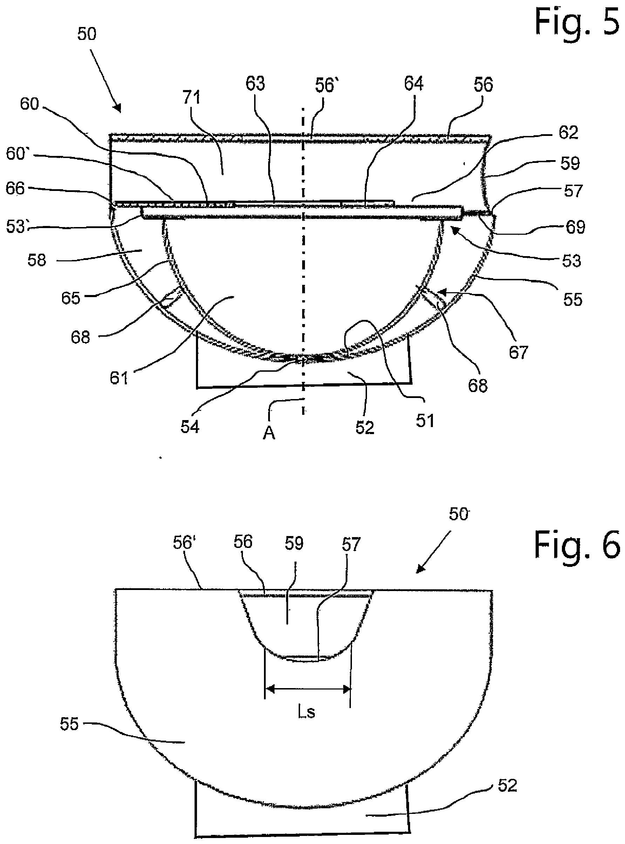

Fig. 5 und Fig. 6 zeigen eine Variante einer Feuerungseinrichtung 50, die ähnlich wie diejenige nach Fig. 1 bis Fig. 4 ausgestaltet ist, von der nachfolgend nurmehr die Unterschiede dargetan sind. Diese Feuerungseinrichtung 50 weist ein topfförmiges Aussengehäuse 55 und einen Feuerungsbehälter 65 darin auf, wobei das Aussengehäuse 55 im oberen Bereich mit einer seitlichen Beschickungsöffnung 59 versehen und oben auf ihr eine wegnehmbare Grillscheibe 56 aufgesetzt ist. Der halbkugel- oder andersförmig ausgebildete Feuerungsbehälter 65 ist mit dem mit Brennmaterial beschickbaren Feuerraum 61 versehen und erstreckt sich annähernd vom Boden 51 bis unterseitig zur Beschickungsöffnung 59 des Aussengehäuses 55. Er könnte aber auch kleiner dimensioniert sein und oberhalb des Bodens 51 enden und nur mit einem Teil der Höhe des Aussengehäuses 55 bis zu einem unteren die Beschickungsöffnung 59 begrenzenden Längskante 57 bemessen sein.

Erfindungsgemäss ist auf dem Feuerungsbehälter 65 eine für das Zubereiten der Nahrungsmittel vorgesehene Heizscheibe 60 mit einem Ausschnitt 62 für den Zugang von aussen in den Feuerraum 61 gehalten.

Die Heizscheibe 60 mit dem Ausschnitt 62 ist auf diesen im Aussengehäuse 55 integrierten Feuerungsbehälter 65 befestigt, die drehbar im Aussengehäuse 55 um diese vertikale Achse A gelagert ist, so dass der Ausschnitt 62 für den Zugang zum Feuerraum 61 in seiner entsprechenden Drehposition wie gezeigt positioniert werden kann. Hingegen beim Drehen der Heizscheibe 60 um einen Winkel von annähernd 180° um die Achse A, bei der sich dann ihre Auflagefläche 60' vorne bei der Beschickungsöffnung 59 befindet, kann das Auflegen von Nahrungsmitteln von aussen erfolgen.

Bei der Heizscheibe 60 mit ihrer ringförmigen Grundform mit einer inneren Öffnung 63 ist der Ausschnitt 62 begrenzt durch Schnittkanten 64 segment-, rechteck- oder andersförmig ausgebildet, zum Beispiel wie die Heizscheibe 20 gemäss Fig. 1. Der Ausschnitt 62 ist vorzugsweise annähernd mit einer Länge Ls vorne wie die Breite der Beschickungsöffnung 59 im Aussengehäuse 55 dimensioniert, wobei diese Länge Ls im Verhältnis zum Aussendurchmesser kleiner als diejenige bei der Feuerungseinrichtung 10 ausgebildet ist. Die obere Auflagefläche 60' der Heizscheibe 60 liegt vorzugsweise auf der Höhe der unteren die Beschickungsöffnung 59 begrenzenden Längskante 57 des Aussengehäuses 55.

Für das Drehen des Feuerungsbehälters 65 weist dieser ein Drehlager 67 auf, das als Gleitlager mit zweckmässigerweise mehreren versetzt zueinander angeordneten Gleitelementen 68 besteht, die innenseitig im Aussengehäuse 15 geführt sind. Zusammen mit einem Zentriermittel 54 im Boden 51 des Aussengehäuses wird ein geführtes Drehen des Feuerungsbehälters 65 und der Heizscheibe 60 darin um die Achse A gewährleistet. Dieses Drehlager 67 könnte wie dasjenige gemäss Fig. 2 oder auch als ein um den Feuerungsbehälter 65 verlaufenden Lagerring ausgestaltet sein.

Der Feuerungsbehälter 65 mit dem Feuerraum 61 weist oben einen nach aussen vorstehenden ringförmigen Rahmen 53 auf, auf dessen Oberseite die Heizscheibe 20 befindlich ist. Mit diesem ringförmigen Rahmen 53 und einem beim Aussengehäuse nach innen bis zur Aussenseite 53' des Rahmens gerichteten ringförmigen Saum 69 wird ebenso bezweckt, dass Lebensmittel, Brennmaterial, Asche oder dergleichen nicht in den Ringraum 58 zwischen dem Feuerungsbehälter und dem Aussengehäuse fallen können. Die ausser bei ihrem Ausschnitt 62 ringförmig ausgebildete Heizscheibe 60 ist koaxial im Aussengehäuse 55 verlaufend derart angeordnet, dass zwischen diesen ein ringförmiger Dichtspalt 66 besteht, durch den verhindert wird, dass Nahrungsmittel von der Auflagefläche 60' auf der Heizscheibe 20 aussen herunterfällt.

Diese Grillscheibe 56 bei der Feuerungseinrichtung 50, die im Unterschied zu derjenigen nach Fig. 3 auf der Oberseite des Aussengehäuses 55 wegnehmbar aufgesetzt ist, kann für ein Einsetzen bzw. Herausnehmen des Feuerungsbehälters 65, dem oben bei ihm aufgesetzten ringförmigen Rahmen 53 und der Heizscheibe 60 weggenommen werden. Die Grillscheibe 56 kann bei einem Absatz oder bei Auflagern innenseitigen des Aussengehäuses 55 oder auf letzterem aufgelegt sein, was nicht näher veranschaulicht ist.

Zweckmässigerweise ist zwischen der Grillscheibe 56, der Heizscheibe 60 und dem Aussengehäuse 55 ein Hohlraum 71 gebildet, in dem die eingelegten Lebensmittel gebacken, grilliert und/oder anderweitig genussbereit aufgewärmt werden. Dieser Hohlraum 71 ist vorteilhaft mit einer Höhe von mehreren Zentimetern

Die Grillscheibe 56 ist vorzugsweise mit einer zentralen Durchgangsöffnung 56' und nicht näher gezeigten Längsschlitzen zwecks Erzielung eines Grillmusters beim darauf legbaren Grillgut versehen. Ausgehend vom Feuerraum 61 können Feuerflammen durch die Öffnungen 63, 64 und diese Öffnung 56 ragen und zudem der Luftzug verstärkt werden, oder die Öffnung 56 kann von einem nicht gezeigten Deckel geschlossen werden, damit dieser Hohlraum 71 nach oben geschlossen ist und eine höhere Temperatur darin erzeugt werden kann bzw. weniger Hitze daraus entweicht, wie dies auch durch die kleinere seitliche Beschickungsöffnung 59 ermöglicht wird.

Die Erfindung ist mit den obigen Ausführungsbeispielen ausreichend dargetan. Sie könnte aber selbstverständlich noch andere Varianten umfassen.

Im Prinzip könnte auch nur die Heizscheibe mit dem Ausschnitt auf dem Feuerungsbehälter drehbar gelagert sein, während der Feuerungsbehälter im Aussengehäuse fixiert wäre. Die Heizscheibe wäre dabei auf dem Feuerungsbehälter zentriert. Auch anstelle dieses Rahmens könnte der Feuerungsbehälter direkt eine Auflage für die Heizscheibe bilden.

Im Prinzip könnte eine Heizscheibe im Aussengehäuse eingesetzt sein, dies ohne einen Feuerungsbehälter, sondern dass die Aufnahme des Brennmaterials und damit der Feuerraum in der unteren Schale des Aussengehäuses selbst gebildet wäre. Die Heizscheibe wäre vorzugsweise mit ihrem Aussenumfang innenseitig bei der unteren Schale des Aussengehäuses rotierbar gelagert. Erfindungsgemäss wäre die für das Zubereiten der Nahrungsmittel vorgesehene Heizscheibe mit dem Ausschnitt für den Zugang von aussen in den vom Aussengehäuse gebildeten Feuerraum gelagert.

Der Ausschnitt bei der Heizscheibe könnte statt segmentförmig auch anders ausgebildet sein, wie zum Beispiel durch eine oder mehrere Öffnungen in einer an sich kreisförmigen Ausbildung der Heizscheibe. In ihr könnten auch an sich bekannte Grillschlitze reihenweise vorhanden sein, um beim Grillieren diesen als Grillrost-Effekt bekannten Goldbrand zu erzielen.

Dem oberen Auslass könnten auch je nach den Gegebenheiten mehr als eine Öffnung zugeordnet sein. Bei der Heizscheibe können zum Beispiel aussenseitig Löcher versehen sein, um sie mit einem einhängbaren stangenförmigen Werkzeug zu drehen. Auch die Beschickungsöffnung könnte theoretisch aus mehr als einer Öffnung bestehen.

Auf die Heizscheibe kann eine Platte aus einem hitzebeständigen Stein oder Keramik vorzugsweise zum Backen von Pizzas, Brot oder dergleichen gelegt sein, oder sie kann aus einem hitzebeständigen Stein oder Keramik hergestellt sein.

## Patentansprüche

1. Feuerungseinrichtung zum Zubereiten, vorzugsweise zum Grillieren undloder Backen von Nahrungsmitteln, wobei die Feuerungseinrichtung (10, 50) wenigstens ein Aussengehäuse (15, 55) aufweist, das mit einer Beschickungsöffnung (19, 59) und mit einem mit Brennmaterial, wie Holz, Kohle und/oder ähnlichem beschickbaren Feuerraum (21, 61) versehen ist, wobei die Aufnahme des Brennmaterials im Feuerraum (21, 61) in einer unteren Schale (15') des Aussengehäuses (15) oder in einem in letzterem eingesetzten Feuerungsbehälter (25, 65) erfolgt,
**dadurch gekennzeichnet, dass**
im Aussengehäuse (15) oder auf dem Feuerungsbehälter (25, 65) eine für das Zubereiten der Nahrungsmittel vorgesehene Heizscheibe (20, 60) mit einem Ausschnitt (22, 62) für den Zugang von aussen in den Feuerraum (21, 61) gehalten ist.

2. Feuerungseinrichtung nach Anspruch 1, **dadurch gekennzeichnet, dass**
die Heizscheibe (20, 60) mit dem Ausschnitt (22, 62) auf einem im Aussengehäuse (15, 55) integrierten Feuerungsbehälter (25, 65) platziert ist, wobei zumindest die Heizscheibe (20, 60) und vorzugsweise der Feuerungsbehälter (25, 65) drehbar im Aussengehäuse (15) um eine annähernd vertikale Achse (A) gelagert sind.

3. Feuerungseinrichtung nach Anspruch 1 oder 2, **dadurch gekennzeichnet, dass**
innen bei der Beschickungsöffnung (19, 59) des Aussengehäuses (15, 55) entweder der Ausschnitt (22, 62) der Heizscheibe (20, 60) für den Zugang zum Feuerraum (21, 61) oder bei gedrehter Heizscheibe (20, 60) vorzugsweise um einen Winkel von bis zu 180° ein Auflegen der Nahrungsmittel auf ihre Auflagefläche (20', 60') von aussen zugänglich ist.

4. Feuerungseinrichtung nach einem der Ansprüche 1 bis 3, **dadurch gekennzeichnet, dass**
der Feuerungsbehälter (25, 65) mittels eines Drehlagers (27, 67) im Aussengehäuse (15, 55) um eine annähernd vertikale Achse (A) rotierbar gehalten und die Heizscheibe (20, 60) auf ihm befestigt ist.

5. Feuerungseinrichtung nach einem der Ansprüche 1 bis 4, **dadurch gekennzeichnet, dass**
sich das Aussengehäuse (15) aus einer unteren und einer oberen Schale (15', 15") zusammensetzt, die gegeneinander gerichtet sind, wobei wenigstens ein oberer Auslass (16) für den Rauchabzug und seitlich die vordere Beschickungsöffnung (19) vorgesehen sind.

6. Feuerungseinrichtung nach einem der Ansprüche 1 bis 5, **dadurch gekennzeichnet, dass**
die Heizscheibe (20) ausser beim Ausschnitt (22) mit einem annähernd runden Aussenumfang ausgebildet ist, der koaxial zu der unteren mit einem kreisförmigen Querschnitt versehenen Schale (15') des Aussengehäuses (15) verlaufend angeordnet ist.

7. Feuerungseinrichtung nach Anspruch 6, **dadurch gekennzeichnet, dass**
die Heizscheibe (20, 60) mit ihrem runden Aussenumfang derart angeordnet ist, dass zwischen ihr und der innenseite des Aussengehäuses (15, 55) ein ringförmiger Dichtspalt (14, 66) gebildet ist, durch den verhindert wird, dass Nahrungsmittel von der Auflagefläche (20', 60') auf der Heizscheibe (20, 60) aussen herunterfällt.

8. Feuerungseinrichtung nach Anspruch 6 oder 7, **dadurch gekennzeichnet, dass**
die Heizscheibe (20, 60) eine ringförmige Grundform mit einer inneren Öffnung (22', 63) aufweist, wobei ihr Ausschnitt (22, 62) segmentförmig ausgebildet ist und durch ihn die Heizscheibe (20, 60) mit einer solchen Länge an ihrem Umfang ausgeschnitten ist, dass diese annähernd der Länge (L, Ls) der Beschickungsöffnung (19, 59) im Aussengehäuse (15, 55) entspricht.

9. Feuerungseinrichtung nach einem der Ansprüche 1 bis 8, **dadurch gekennzeichnet, dass**
der Feuerungsbehälter (25, 65) annähernd gleichförmig wie diese untere Schale (15') des Aussengehäuses (15) bzw. das Aussengehäuse (55) ausgebildet und durch das Drehlager (27, 67) zusammen mit der Heizscheibe (20, 60) berührungslos im Aussengehäuse (15, 55) geführt ist.

10. Feuerungseinrichtung nach einem der Ansprüche 1 bis 9, **dadurch gekennzeichnet, dass**
die obere Auflagefläche (20', 60') der Heizscheibe (20, 60) im Bereich der unteren die Beschickungsöffnung (19, 59) begrenzenden Längskante (19', 57) des Aussengehäuses (15, 55) liegt.

11. Feuerungseinrichtung nach einem der Ansprüche 1 bis 10, **dadurch gekennzeichnet, dass**
die Beschickungsöffnung (19) mit einer solchen Länge (L) und Höhe dimensioniert ist, dass der Feuerungsbehälter (25) und die an ihm befestigte Heizscheibe (20) gemeinsam in das Aussengehäuse (15) einsetzbar bzw. wieder aus diesem entnehmbar sind.

12. Feuerungseinrichtung nach einem der Ansprüche 1 bis 10, **dadurch gekennzeichnet, dass**
eine Grillscheibe (56) auf der Oberseite des Aussengehäuses (55) wegnehmbar aufgesetzt ist, damit der Feuerungsbehälter (55) und die auf ihm befestigte Heizscheibe (60) gemeinsam von oben in das Aussengehäuse (55) einsetzbar bzw. wieder aus diesem entnehmbar sind.

13. Feuerungseinrichtung nach einem der Ansprüche 1 bis 12, **dadurch gekennzeichnet, dass**
bei der Schale (15') des Aussengehäuses (15) bzw. beim Aussengehäuse (55) ein sich nach innen erstreckender ringförmiger Saum (29, 69) zumindest entlang der Beschickungsöffnung (19, 59) angebracht ist, der sich nach innen annähernd bis zur Aussenseite (35', 53') des Rahmens (30) erstreckt.

14. Feuerungseinrichtung nach einem der Ansprüche 1 bis 13, **dadurch gekennzeichnet, dass**
das Aussengehäuse (15) aus einem umgeformten Metall gefertigt ist und seine obere und untere Schale vorzugsweise zusammengeschweisst sind.

15. Feuerungseinrichtung nach einem der Ansprüche 1 bis 14, **dadurch gekennzeichnet, dass**
die Heizscheibe (20, 60) und der schalenförmige Feuerungsbehälter (25, 55) aus einem Metall hergestellt sind, oder dass die Heizscheibe aus einem hitzebeständigen Stein oder Keramik besteht.
